# EUROPEAN PATENT APPLICATION

(11) **EP 3 858 133 A1**
(43) Date of publication of application: **04.08.2021**
(21) Application number: 20154317.0
(22) Date of filing: 29.01.2020
(51) Int. Cl.: A01G 3/02

(54) **CUTTING TOOL**

(71) Applicant: HUSQVARNA AB, 561 82 Huskvarna (SE)
(72) Inventor: Rudolf, Peter, 89250 Senden (DE)
(74) Representative: Finkele, Rolf

(57) **Abstract**

A cutting tool **(100)** includes a first blade **(102)** and a second blade **(104).** The second blade **(104)** is pivotally coupled to the first blade **(102)** at a pivot point. The cutting tool **(100)** includes a first handle **(108)** and a second handle **(110).** The first handle **(108)** is operatively coupled to the first blade **(102).** The second handle **(110)** is operatively coupled to the second blade **(104).** A wire **(134)** is at least partially disposed in at least one of the first handle **(108)** and the second handle **(110).** The wire **(134)** extends from the first handle **(108)** to the second handle **(110).** The cutting tool **(100)** is characterized in that the first handle **(108)** is pivotally coupled to the second handle **(110)** at the pivot point. Further, the wire **(134)** is fully enclosed by the first handle **(108)** and the second handle **(110).** Thereby the wire **(134)** is at least partially disposed in a channel **(138)** comprising at least one of the first handle **(108)** and the second handle **(110),** with the channel being located at least above or below at least one of the first blade **(102)** and the second blade **(104).**

## Description

### TECHNICAL FIELD

The present disclosure relates to a cutting tool. More specifically, the present disclosure relates to the cutting tool which provides a compact and ergonomic profile for ease of handling of the cutting tool.

### BACKGROUND

Cutting tools such as secateurs, loppers, rakes, pliers are used for performing cutting action using one or more blades. Put simply, such tools provide increased mechanical assistance and ease of operation to a common user to conveniently perform operations such as with branches of varying dimensions. Further, the cutting tools provide benefits such as trapping bypass cutting or simply "bypass" allows pruning/cutting by the cutting tools while holding an object (i.e. branch) with one of the cutting edges.

However, there may be instances where working with the cutting tools become inconvenient for common users. For instance, packaging of components and wires such as torque or sensor wires within conventional cutting tools may lead to compromise with compactness and ergonomics of such cutting tools. Further, there are also concerns that a non-compact or non-uniform geometry of the cutting tool may become troublesome for the common users to handle during application.

An example of a cutting tool is provided in US patent application US 60,61,912 A (hereinafter referred to as '912 reference). The '912 reference provides a cutting tool. The cutting tool includes a pair of jaws pivoting about a pivot point. Each of the two jaws extent behind this pivot point into arm members that are partially covered by electrically isolating handle members. Wires are arranged with the cutting tool for a heating element attached to the jaws. The power supplied via a power supply cable to heat the jaws runs via the wires placed in a conduit inside one of the arm members into both of the jaws.

An example of a cutting tool is provided in European patent 3 262 923 (hereinafter referred to as '923 reference). The '923 reference provides a cutting tool. The cutting tool includes a first and a second cutting blades which can be moved relative to one another. The cutting blades each are associated with handles that house a wire to electrically connect the electric components within the handles, thus to allow a motor driven drive unit to assist the cutting. To guide the wire from the first handle into the second handle an extension housing is fixed with the first handle. This extension housing acts as a channel in witch the wire runs between the two handles.

Thus, there is a need of an improved cutting tool which allows ease of operation on account of a compact and ergonomic profile of the cutting tool. Further, it would be an added benefit if the cutting tool allows better packaging of components such as wires within the cutting tool.

### SUMMARY

In view of the above, it is an objective of the present invention to solve or at least reduce the drawbacks discussed above. The objective is at least partially achieved by a cutting tool. The cutting tool includes a first blade and a second blade. The second blade is pivotally coupled to the first blade at a pivot point. The first blade and the second blade together perform a cutting action on an object placed between them. The cutting tool includes a first handle and a second handle. The first handle is operatively coupled to the first blade. The second handle is operatively coupled to the second blade. Further, a wire is disposed within at least one of the first handle and the second handle. The cutting tool is characterized in that the first handle is pivotally coupled to the second handle at the pivot point. Further the wire is fully enclosed by the first handle and the second handle and is at least partially disposed in a channel that comprises at least one of the first handle and the second handle. That channel being located at least above or below at least one of the first blade and the second blade. Thus, the present disclosure provides a simple, compact, and user-friendly cutting tool which allows improved packaging (say of the wire) without compromising with functional and applicational benefits of the cutting tool. As the wire is running through the handles and inside a channel that is located above or below a blade there is no need for an additional extension housing fixed to one of the handles to allow for the wire to switch between the two of them.

According to an embodiment of the present disclosure, at least of part of the at least one of the first handle and the second handle is extending in to the other one of the handles. By this the two handles allow the realization of an uninterrupted way of the wire from one handle into the other, that does pose any interface problem that risks the wire gets uncovered for a certain arrangement of the cutting tool.

According to an embodiment of the present disclosure, at least a part of the wire is present within a range from the pivot coupling of the first handle and the second handle. This helps in uniform distribution of the wire within the cutting tool.

According to an embodiment of the present disclosure, the range is around 10-15 mm from the pivot coupling. This helps in providing a compact and ergonomic profile to the cutting tool.

According to an embodiment of the present disclosure, the wire is a sensor wire. The wire transmits a signal that is representative of the force applied by the user and provides it to a drive unit (or any processor) to take the force into account to check if any supplemental force is required.

According to an embodiment of the present disclosure, the wire is at least partially disposed in a channel created by coupling of at least one of the first blade and the second blade and at least one of the first handle and the second handle. This protects the wire of damages introduced by external forces.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** shows a perspective view of a cutting tool, in accordance with an aspect of the present disclosure;
**FIG. 2** shows a perspective view of a wire between a first handle and a first blade of the cutting tool, in accordance with an aspect of the present disclosure;
**FIG. 3** shows a perspective view of a drive unit within the cutting tool, in accordance with an aspect of the present disclosure; and
**FIG. 4** shows a perspective view of the wire within the first handle of the cutting tool, in accordance with another aspect of the present disclosure.

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention may be utilized in other embodiments and even other types of structures and/or methods. In the drawings, like numbers refer to like elements.

### DESCRIPTION OF EMBODIMENTS

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

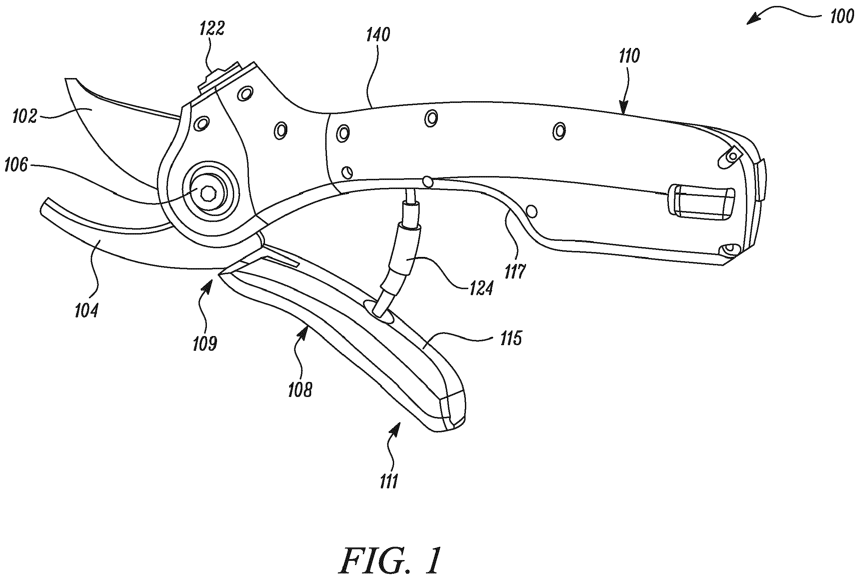

**FIG. 1** illustrates a cutting tool **100**. The cutting tool **100** of the present disclosure is illustrated as a secateur, however, the present disclosure may be readily applied to any cutting tool **100** such as, but not limited to, a lopper, shear, scissor etc. with two or more cutting edges. The cutting tool **100** includes one or more blades i.e. a first blade **102** and a second blade **104**. The first blade **102** could be a replaceable blade. Further, the second blade **104** is pivotally coupled to the first blade **102**. The first blade **102** and the second blade **104** together perform a cutting action on an object (generally a branch, not shown) placed between them.

As illustrated in **FIG. 1**, the cutting tool **100** includes one or more handles i.e. a first handle **108** and a second handle **110**. The first handle **108** is operatively coupled with the first blade **102**. Further, the first handle **108** defines a front portion **109** and a back portion **111**. As illustrated in the present figure, the second handle **110** includes a front portion **140**. During application of the cutting tool **100**, profile, shape, dimensions of the front portion **140** have a bearing on ergonomics and handling of the cutting tool **100**. The second handle **110** is operatively coupled with the second blade **104**. The cutting tool **100** further includes a removable axis bolt and/or screw **106**. The removable axis bolt and/or screw **106** is provided at the pivot point where the first blade **102** and the second blade **104** are pivotally coupled.

In some embodiments, the removable axis bolt and/or screw **106** may be any one or more of a coupling nut, a flange nut, a hex nut, a lock nut, a slotted nut, a square nut, a wheel nut and the like.

In closed position of the cutting tool **100**, at least a part of the second handle **110** at least partially encloses the back portion **111** of the first handle **108**. The first handle **108** and the second handle **110** have one or more sides **115**, **117** respectively that come close to each other when closing the cutting tool **100**. Moreover, the cutting tool **100** preferably has a spring **124** which allows coupling of the first handle **108** and the second handle **110**. The spring **124** could be further connected through an adapter (not shown) to the first handle **108** and allows transmission of any supplemental force required to allow desired cutting action by the first handle **108** and the second handle **110.** In some embodiments, the adapter helps to assemble and retain the first blade **102** within the cutting tool **100.** The first blade **102** may then be replaced by sliding the first blade **102** out from the adapter.

In some embodiments, the one or more blades i.e. the first blade **102** and the second blade **104** may be one or more of a clip point blade, a drop point blade, a gut hook blade, a hawkbell blade, a needle point blade, a straight back blade, a sheepsfoot blade and a spear point blade.

In some embodiment, the one or more blades i.e. the first blade **102** and the second blade **104** may be made of steel or any other material as used or known in the art. Choice of the material for any of the first blade **102** and the second blade **104** will generally depend upon factors such as life, application, weight or other parameters related to the cutting tool **100**. However, the present disclosure is not to be limited by the type of material of the first blade **102** and the second blade **104** in any manner.

During implementation, at least one of the first blade **102** and the second blade **104** may be a fixed blade while the other performs desired cutting action. Alternately or additionally, both the first blade **102** and the second blade **104** may be movable during the cutting action.

Advantageously, in accordance with an embodiment of the present disclosure, elastic, rounded design of the one or more sides **115, 117** of both the first handle **108** and the second handle **110** may allow to avoid an undesirable crushing, in particular a pinching of operator's or users hand, between the first handle **108** and the second handle **110**, and the like.

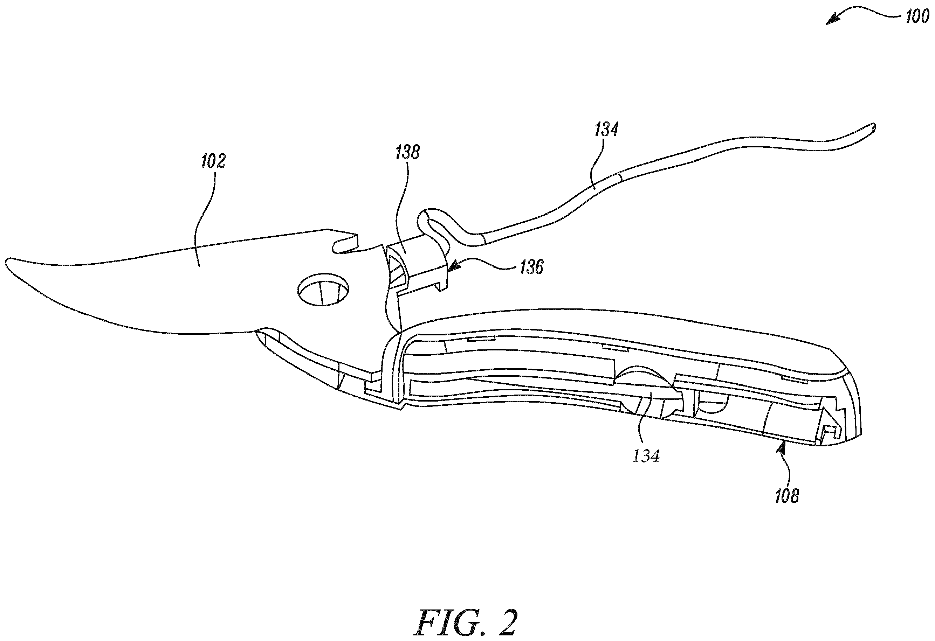

**FIG. 2** illustrates the cutting tool **100** which has a wire **134** disposed within the first handle **108**. The present disclosure illustrates the wire **134** disposed within the first handle **108** in some embodiments, however actual implementation of the present disclosure may have the wire **134** disposed in at least one of the first handle **108** and the second handle **110.** The wire **134** is at least partially disposed in a groove **136** defined by at least one of the first handle **108** and the second handle **110** such that the wire **134** extends from the first handle **108** to the second handle **110**. The first handle **108** is pivotally coupled to the second handle **110** at the pivot point and the wire **134** is fully enclosed by the first handle **108** and the second handle **110**.

Referring to **FIG. 2** shows the first handle **108** that is operatively coupled to the first blade **102**. At least a part of the wire **134** is present within a range from the pivot coupling of the first handle **108** and the second handle **110.** In the depicted embodiment the first blade **102** is located above a channel that comprises the first handle **108**. While with this embodiment the first blade **102** is forming the top of the channel it is well understood that the top of the channel could also be formed by the first handle **108** itself (or even by a separate element) oriented below the first blade **102**.The range is around 10-15 mm, or any other range depending upon application needs and the like, from the pivot coupling. This helps in providing a compact, and ergonomic structural profile to the cutting tool **100**, particularly around the front portion **140** of the first handle **108**. The wire **134** is at least partially disposed in a channel **138** created by coupling of at least one of the first blade **102** and the second blade **104** and at least one of the first handle **108** and the second handle **110**. More specifically, the wire **134** is running through the channel **138** between the first handle **108** and the first blade **102.**

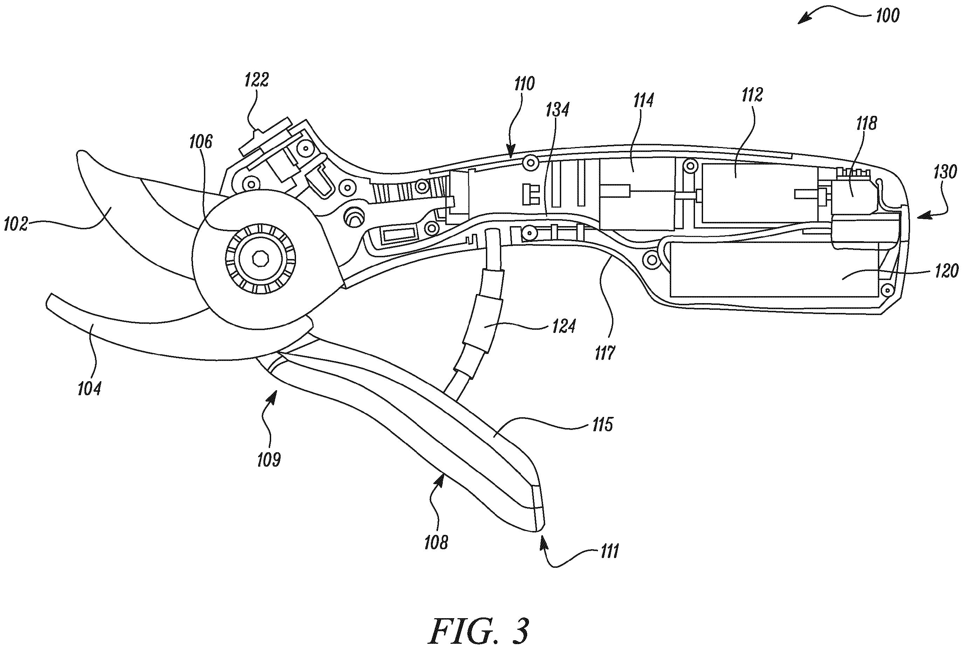

**FIG. 3** illustrates the cutting tool **100** which includes a drive unit **130**. The drive unit **130** includes a motor **112**, a gearbox **114**, a wind and a clutch. The drive unit **130** further includes a printed circuit board assembly (PCBA) **118**. Moreover, the drive unit **130** includes a battery **120**. The drive unit **130** is operatively coupled to at least one of the first blade **102** and the second blade **104**. More specifically, the drive unit **130** is housed within the second handle **110.** The battery **120** of the drive unit **130** is also housed within the second handle **110.** This helps in reducing the dimensions and special footprint of the first handle **108**. The drive unit **130** is configured to selectively provide a supplemental motor force to assist a movement of at least one of the first blade **102** and the second blade **104** to perform the cutting action.

In a preferred embodiment, all components of the drive unit **130** are housed in a single handle i.e. the second handle **110** as best illustrated in **FIG. 3**. This helps in reducing the thickness, dimensions, ergonomic profile or spatial footprint of the second handle **110**, and the first handle **108**. This even allows the combined profile of the second handle **110**, and the first handle **108** to be realized as one part, particularly during closed state of the first handle **108**.

In an embodiment, the cutting tool **100** includes a switch to activate or deactivate the drive unit **130**. In the depicted embodiment this switch is realized in top of the cutting tool **100** as slider or trigger **122**. On engaging, moving or pressing the slider or trigger **122** the drive unit **130** gets switched on and off and thus the cutting tool **100** becomes convenient and safe to handle by common users. The drive unit **130** may be deactivated for instances which may require to save/extend battery life or allow uninterrupted operation of the power-assisted cutting tool **100**, such as for low battery conditions. In such instances of the deactivated drive unit **130**, it could be possible that the motor **112** will remain in a disengaged/OFF state leading to a purely user-based cutting action by the cutting tool **100**, without any supplemental motor force. In one embodiment the slider or trigger **122** might also look the cutting tool **100** in a closed status.

In some embodiments, the slider or trigger **122** may be a button, a knob, a single pole single throw switch, a single pole double throw switch, a double pole single throw switch, a double pole double throw switch, a push-button switch, a toggle switch, a limit switch, a float switch, and the like. Alternately or additionally, a button, a knob, or any other switching means as used or known in the relevant art may be present in place of the slider or trigger **122**.

In some embodiments, boundary lines of both the first handle **108** and the second handle **110** may be parallel to each other. Alternately or additionally, the boundary lines of the one or more of handles i.e. the first handle **108** and the second handle **110** may be non-aligned with respect to each other.

In some embodiment, the battery **120** may be a primary battery, a secondary battery. For example, the battery **120** may be one or more of a lithium-ion, a nickel cadmium, a nickel-metal hydride, lead-acid.

Again, referring to **FIGS. 2****,** **3****,** the wire **134** is running between the one or more of blades i.e. the first blade **102** and the second blade **104** and the one or more of handles i.e. the first handle **108** and the second handle **110.** The wire **134** is connected to the drive unit **130.** The wire **134** may be a sensor wire receiving signals from a force sensor that detects a torque between the one or more blades and the one or more handles, although other types, uses, applications of the wire **134** have been contemplated and are well within the scope of the present disclosure. In one embodiment the force sensor detects the force applied by the user which is further sent to a drive unit **130** to take the force into account. Further, the drive unit **130** may decide the supplemental force required, if any, based on the force applied. In some embodiments, the wire **134** may be running through the first handle **108.** Some part of the wire **134** is even running through the second handle **110**.

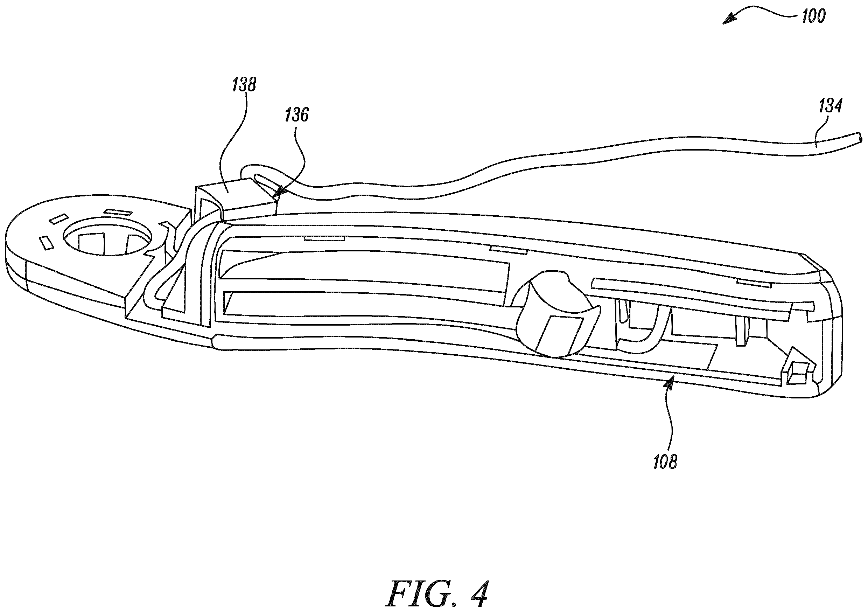

**FIG. 4** illustrates the first handle 108 together with the wire **134**. The first handle 108 has a the channel portion **138** that extends into the second handle **110** in an assembled state of the cutting tool **100**. The channel portion **138** includes the groove **136**. The wire **134** is running between the first blade **102** and the first handle **108**. The channel **138** avoids need of additional geometry and/or substantial spacing between the first handle **108** and the second handle **110**. The channel **138** helps in reducing geometry of the front portion **140** as well of the second handle **110** and therefore making it possible to have substantial room for user engagement further into the direction of the pivot point or anywhere else on the first handle **108**. In this way, the cutting tool **100** may be easily operated by the user, without being limited by any factor associated with the user (say size of hands of the user).

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF ELEMENTS

- **100**: Cutting Tool
- **102**: First Blade
- **104**: Second blade
- **106**: Removable axis Bolt and/or Screw
- **108**: First handle
- **109**: Front Portion
- **110**: Second handle
- **111**: Back Portion
- **112**: Motor
- **114**: Gear Box
- **115**: Inner Side
- **117**: Inner Side
- **118**: Printed Circuit Board Assembly (PCBA)
- **120**: Battery
- **122**: Slider or Trigger
- **130**: Drive unit
- **134**: Wire
- **136**: Groove
- **138**: Channel
- **140**: Front Portion

## Claims

1. A cutting tool (**100**) comprising:
a first blade (**102**);
a second blade (**104**) pivotally coupled to the first blade (**102**) at a pivot point, wherein the first blade (**102**) and the second blade (**104**) together perform a cutting action on an object placed therebetween;
a first handle (**108**) operatively coupled to the first blade (**102**);
a second handle (**110**) operatively coupled to the second blade (**104**); and
a wire (**134**) disposed within at least one of the first handle (**108**) and the second handle (**110**), ;
**characterized in that:**
the first handle (**108**) is pivotally coupled to the second handle (**110**) at the pivot point;
and the wire (**134**) is fully enclosed by the first handle (**108**) and the second handle (**110**), and
the wire (**134**) is at least partially disposed in a channel (**138**) comprising at least one of the first handle (**108**) and the second handle (**110**), with the channel being located at least above or below at least one of the first blade (**102**) and the second blade (**104**).

2. The cutting tool (**100**) of claim 1, wherein at least of part of the at least one of the first handle (**108**) and the second handle (**110**) is extending in to the other one of the handles (**108**, **110**).

3. The cutting tool (**100**) of claim 1, wherein at least a part of the wire (**134**) is present within a range from the pivot coupling of the first handle (**108**) and the second handle (**110**).

4. The cutting tool (**100**) of claim 3, wherein the range is around 10-15 mm from the pivot coupling.

5. The cutting tool (**100**) of claim 1, wherein the wire (**134**) is a sensor wire (**134**).

6. The cutting tool (**100**) of claim 1, the wire (**134**) is at least partially disposed in a channel (**138**) created by coupling of at least one of the first blade (**102**) and the second blade (**104**) and at least one of the first handle (**108**) and the second handle (**110**).
